Europäisches Patentamt

European Patent Office

Office européen des brevets

(19)

(11) **EP 1 416 693 A2**

(12) **EUROPEAN PATENT APPLICATION**

(43) Date of publication:
06.05.2004 Bulletin 2004/19

(51) Int Cl.⁷: **H04L 27/26**

(21) Application number: 03256230.8

(22) Date of filing: 02.10.2003

| | |
|---|---|
| (84) Designated Contracting States:<br>**AT BE BG CH CY CZ DE DK EE ES FI FR GB GR<br>HU IE IT LI LU MC NL PT RO SE SI SK TR**<br>Designated Extension States:<br>**AL LT LV MK**<br><br>(30) Priority: **28.10.2002 GB 0225039**<br><br>(71) Applicant: **Sony United Kingdom Limited<br>Weybridge, Surrey KT13 0XW (GB)** | (72) Inventor: **Asanbeng Atungsiri, Samuel<br>Basingstoke,Hampshire RG21 4BS (GB)**<br><br>(74) Representative: **DeVile, Jonathan Mark, Dr. et al<br>D. Young & Co<br>21 New Fetter Lane<br>London EC4A 1DA (GB)** |

(54) **Symbol timing recovery in a multicarrier receiver**

(57)    A receiver for determining a symbol synch time for recovering data from a symbol of signal samples generated in accordance with orthogonal frequency division multiplexing. The symbol includes a guard period, which carries data repeated from a data bearing part of the symbol and pilot carrier signals. The receiver comprises a pilot assisted tracker, a guard adapted matched filter and a symbol time adjustment estimator operable to determine an adjustment to the symbol synch time using the pilot assisted tracker and the guard adapted filter. The symbol time adjustment estimator includes a channel impulse response profile store and a signal processor, the signal processor being operable to maintain a representation of the impulse response of the channel. The signal processor utilises the channel impulse response profile to generate an offset which reduces the effects of inter symbol interference caused by channel impulse response components which are outside the guard interval with respect to a main path through which the symbol is received.

Fig. 4A

## Description

### Field of Invention

The present invention relates to receivers operable to recover data from a symbol of signal samples generated in accordance with orthogonal frequency division multiplexing, the symbol including a guard period which carries data repeated from a data bearing part of the symbol and pilot carrier signals. The present invention also relates to methods of detecting and recovering data from received signal samples.

### Background of Invention

OFDM transmission systems incorporate a guard interval between symbols. The purpose of the guard interval is to avoid or at least reduce the effects of InterSymbol Interference (ISI) for channels with delay spreads as long as the duration of the guard interval. In such channels, signals can arrive at receivers via different propagation paths within a time window of duration less than or equal to the guard interval. In a cellular OFDM-based network such as that for DTV broadcast, transmitters (or base stations) are spaced so that the propagation time required for a transmitted signal to travel the length of the diameter of each transmitter's cell is the same as the guard interval duration. Thus, it is expected that in a Single Frequency Network (SFN) in which adjacent transmitters or cells use the same frequency, a receiver in a given cell would see significant signal paths from both its home cell and neighbouring cells all arriving within the period of the guard interval.

The cost of building an SFN is proportional to the number of transmitter base-station sites or to the base-station density (base-stations per unit area). A dense SFN is therefore more costly than a less dense or sparse SFN in which transmitter sites are spaced further apart. With regard to OFDM-based systems such as DVB-T, it is expected that spectral efficiency will become a network design concern. This has been the case for other wireless systems such as mobile telephony. Spectral efficiency and network related costs can be minimised by adopting a sparse SFN system architecture. However, as transmitters are spaced further apart in a sparse SFN, there is an increased likelihood that not all signal propagation paths would arrive at a given receiver within the duration of the guard interval. Indeed, even in a normal SFN, any signal of sufficient power arriving at the receiver from any cell other than an immediate neighbour could well be outside the guard interval. These constitute channels with a delay spread that is longer than the guard interval.

In co-pending UK Patent application serial number 0115061.4 there is disclosed a receiver for detecting and recovering data from symbols which include a guard interval of repeated data in the presence of ISI. The receiver disclosed in UK 0115061.4 is arranged to reduce the effects of ISI resulting from versions of the signal received from propagation paths at delays within the guard interval.

### Summary of Invention

According to the present invention there is provided a receiver for determining a symbol synch time for recovering data from a symbol of signal samples generated in accordance with orthogonal frequency division multiplexing. The symbol includes a guard period, which carries data repeated from a data bearing part of the symbol and pilot carrier signals. The receiver comprises a pilot assisted tracker operable to determine an adjustment to the symbol synch time from a pilot assisted channel impulse response estimate, and a guard adapted filter processor. The guard adapted filter comprises a filter and a filter controller. The filter controller is operable to adapt the impulse response of the filter to the signal samples from the guard period, and to excite the filter with the symbol signal samples to generate an output signal, which provides a further representation of the channel impulse response. A symbol time adjustment estimator including a channel impulse response profile store and a signal processor, the signal processor being operable to maintain a representation of the impulse response of the channel through which the received symbol has passed in the channel impulse response profile store. The symbol time adjustment estimator is operable to adjust the symbol synch time in accordance with the adjustment provided by at least one of the pilot assisted tracker and the guard adapted filter processor. The adjustment includes an offset arranged to reduce the effects of inter symbol interference caused by channel impulse response components which are outside the guard interval with respect to a main path through which the symbol is received.

Embodiments of the present invention can provide a receiver capable of reducing the effects of ISI resulting from components of the channel impulse response which fall outside the guard interval. To this end, an offset is introduced into a symbol synch time, which is otherwise determined in accordance with an earliest component of the channel impulse response. The offset is determined to reduce the effect of the ISI resulting from channel impulse response components, which are outside the guard interval.

In one embodiment the symbol time adjustment estimator is operable to compare a temporal length of the channel impulse response from the profile store with the length of the guard interval. If the length of the channel impulse response is greater than the guard interval, the offset to the timing adjustment is set to zero when the channel impulse response delay spread includes a post cursive echo. The offset to the timing adjustment to the symbol start time is set in accordance with a difference between the guard interval and a temporal length of the channel impulse response lying within the guard interval, when the channel impulse response delay spread includes a pre-cursive echo.

For an example where the pilot carriers are distributed throughout the symbol, the pilot assisted tracker may comprise a pilot channel impulse response generator operable to generate the pilot assisted channel transfer function in the frequency domain, by comparing the pilot carrier signals with re-generated versions of the pilot carriers. An interpolation filter is operable to filter the pilot assisted channel transfer function to the effect of interpolating the pilot assisted channel transfer function across the data bearing carriers of the OFDM symbol. A pilot phase adjuster is operable to adjust the phase of the frequency domain channel transfer function estimate to the effect of centring energy of the time domain channel impulse response estimate within a window corresponding to the interpolation filter impulse response.

The distributed nature of the pilot carriers in the symbol has an effect of discretely sampling the frequency domain channel transfer function. As such, in order to generate an estimate of the channel transfer function the samples of the channel transfer function generated from the pilot carriers are passed through an interpolation filter, which has a bandwidth determined in accordance with the relative spacing of the pilot carriers. However, for the case where the channel impulse response contains components which fall outside the guard interval, a phase adjustment is generated with the effect of centring the energy of the channel impulse response within a window formed in the time domain with respect to the transfer function of the interpolation filter in the frequency domain. As will be appreciated, because the samples of the channel transfer function which are generated from the pilot carriers are formed in the frequency domain, filtering these samples in the time domain with an interpolation filter, has an effect of multiplying a window of the transfer function of the interpolation filter as effectively formed in the frequency domain by the time domain channel impulse response. As such, determining a phase offset which has an effect of shifting the channel impulse response estimate so that more of the energy falls within the window, will provide not only a more accurate estimate of the channel impulse response but also an improved cancellation of the channel impulse response.

According to a further aspect of the present invention is provided a receiver for recovering data from a symbol of signal samples generated in accordance with orthogonal frequency division multiplexing. The symbol includes pilot carrier signals distributed throughout the symbol. The receiver comprises a pilot assisted tracker operable to generate a pilot assisted channel transfer function estimate, and a channel correction processor operable to reduce the effects of the channel impulse response in the received symbol using the pilot assisted channel transfer function estimate. The pilot assisted tracker comprises a pilot channel transfer function generator operable to generate the pilot assisted channel transfer function in the frequency domain, by comparing the pilot carrier signals with re-generated versions of the pilot carriers, and an interpolation filter. The interpolation filter is operable to filter the pilot assisted channel transfer function to the effect of providing a frequency domain interpolation of the pilot assisted channel transfer function. The pilot assisted tracker further comprises a pilot phase adjuster operable to adjust the phase of the frequency domain channel transfer function estimate to the effect of centring energy of the time domain channel impulse response estimate within a window corresponding to the interpolation filter transfer function in the frequency domain.

As will be appreciated an embodiment of the invention may include the pilot phase offset adjustment without the symbol synch time offset adjustment.

Various further aspects and features of the present invention are defined in the appended claims.

### Brief Description of the Drawings

One embodiment of the present invention will now be described by way of example only with reference to the accompanying drawings wherein:

Figure 1 is a schematic representation of two successive OFDM symbols;
Figure 2 provides a schematic representation illustrating an OFDM symbol and versions of the symbol delayed and scaled in accordance with further propagation paths for 2(a) a channel impulse response with a path arriving within the guard interval; 2(b) a channel impulse response with a post-cursive propagation path arriving outside the guard interval; and 2(c) a channel impulse response having pre-cursive and post-cursive propagation paths;
Figure 3 is a schematic block diagram of a receiver according to an embodiment of the present invention;
Figure 4A is a schematic block diagram of an FFT symbol timing recovery processor and a post FFT processor which form part of the receiver of Figure 1;
Figure 4B is a schematic block diagram of the FFT symbol timing recovery processor and the post FFT processor shown in Figure 4B, showing parts which form a Symbol Time Tracker;
Figure 5 is a schematic block diagram of a pilot assisted tracker which forms part of the FFT symbol timing recovery processor of Figures 4A and 4B;

Figure 6 is a schematic block diagram of a coarse acquisition processor and a guard adapted filter processor which form part of the FFT symbol timing recovery of Figures 4A and 4B;

Figure 7 is a schematic block diagram of a symbol time adjustment processor shown in Figures 4A and 4B;

Figure 8 is a flow diagram illustrating the operation of the signal processor forming part of the symbol time adjustment processor shown in Figure 7 to form a Channel Impulse Response profile;

Figure 9 provides a schematic representation illustrating an OFDM symbol and versions of the symbol delayed and scaled in accordance with different propagation paths for 9(a) a channel impulse response with a post-cursive path arriving outside the guard interval; 9(b) a channel impulse response with a pre-cursive propagation path arriving outside the guard interval; and 9(c) the channel impulse response of Figure 9(b) but with the symbol start time adjusted to minimise ISI;

Figure 10 provides a graphical illustration of four channel impulse responses shown with respect to an interpolation window;

Figure 11 provides a graphical illustration of the four channel impulse responses shown in Figure 10, with the channel impulse centred within the interpolation window;

Figure 12 provides a graphical illustration of the four channel impulse responses shown in Figure 11, with the channel impulse adjusted with respect to the interpolation window to minimise the effects of ISI;

Figure 13A provides a schematic block diagram of a channel corrector also appearing in Figures 4A and 4B and Figure 13B provides a schematic block diagram of a pilot assisted channel estimator also appearing in Figures 4A and 4B; and

Figures 14 and 15 are flow diagrams illustrating the operation of the symbol time adjustment processor according to an embodiment of the present invention.

## Description of Preferred Embodiments

### 1. List of Symbols & Abbreviations

The following list of symbols and abbreviations is provided to assist in the explanation of example embodiments of the invention.

| | |
|---|---|
| $T_u$ | Useful symbol duration in seconds |
| $T_g$ | Guard interval duration in seconds |
| $T_s$ | Total symbol duration in seconds |
| $N_u$ | Number of samples in useful part of symbol |
| $N_g$ | Number of samples in guard interval of symbol |
| $N_s$ | Number of samples in whole symbol |
| $N_t$ | Number of symbols over which MF output is averaged |
| $\mu_0$ | Half the in-guard CIR delay spread |
| $\eta_0$ | Offset of the SST from the main path TOA |

| | |
|---|---|
| CIR | Channel impulse response |
| CTF | Channel transfer function |
| FFT | Fast Fourier Transform |
| FI-TF | Frequency interpolator transfer function |
| IFFT | Inverse FFT |
| ISI | Inter-symbol interference |
| MA | Moving average filter |
| MF | Matched filter |
| NCO | Number controlled oscillator - here counter for signal samples |
| OFDM | Orthogonal frequency division multiplexing |
| TOA | Time of arrival |
| (C)SST | (Current) Symbol start time |
| STAT | Symbol time acquisition and tracker |
| SFN | Single frequency network |

### 2. Example Application: OFDM

An example embodiment of the present invention will now be described with reference to detecting and recovering data from a COFDM symbol produced for example in accordance with the Digital Video Broadcasting (DVB) standard.

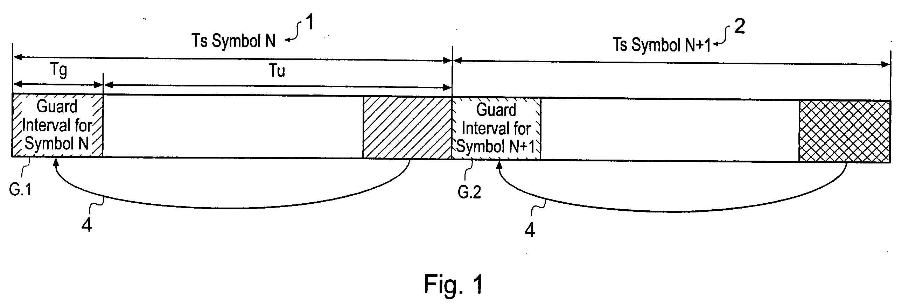

A COFDM symbol which is modulated in accordance with DVB standard is generated by modulating K narrow band carriers in parallel with the data to be communicated. As disclosed in the European telecommunications standards institute number EN300744 version 1.1.2 (1997-08) and entitled "Digital Video Broadcasting (DVB); Frame Structure Channel Coding And Modulation For Digital Terrestrial Television", the COFDM symbols are formed in the frequency domain and then converted in the time domain using an Inverse Fourier Transform. A diagram representing the time domain COFDM symbols is shown in Figure 1.

In Figure 1 two COFDM symbols represented as blocks 1, 2 are shown as they would be transmitted by a DVB transmitter with time progressing from left to right across the page. As shown in Figure 1, each COFDM symbol 1, 2 has a useful part of the symbol during which the data is transmitted. This part of the symbol has duration of $T_u$ seconds and has $N_u$ samples. A guard interval G.1, G.2 of duration $T_g$ seconds separates the current symbol from the previous one. The guard interval has $N_g$ samples. For each symbol 1, 2 the guard interval G.1, G.2 therefore precedes the useful part of the symbol and is formed, as indicated by an arrow 4, by replicating the samples in the last Tg seconds of the useful part of the symbol. Each COFDM symbol of $N_s$ samples therefore has duration $T_s = T_g + T_u$ seconds.

In order to recover the data within the COFDM symbols, the receiver must detect the data bearing signal samples from within the set of received signal samples corresponding to each COFDM symbol. Symbol acquisition entails the location of the optimum point at which the window for FFT processing should start.

## 3. Explanation of Technical problem

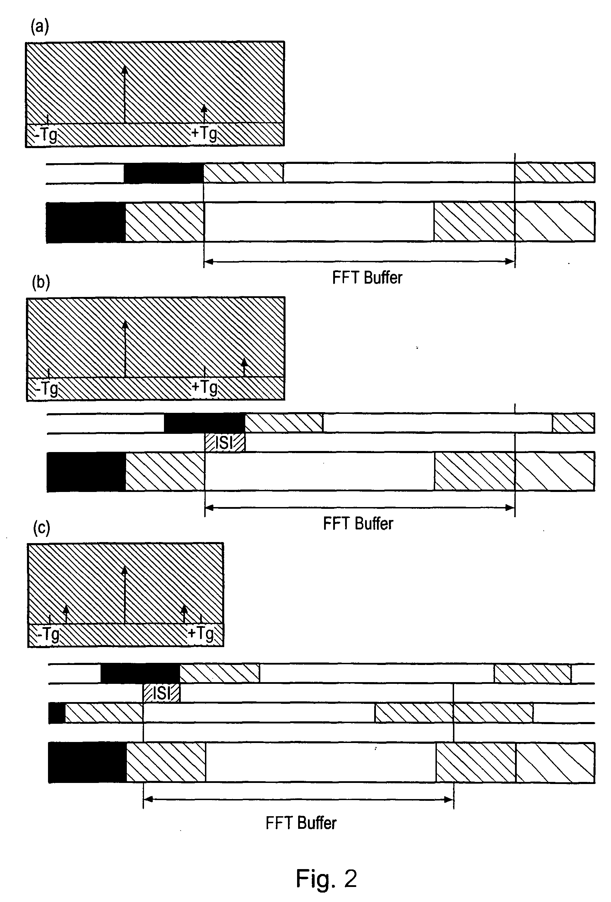

As already explained, in a sparse SFN transmitters are spaced so that the propagation time taken to traverse each cell is longer than the duration of the guard interval. In such a network, there is a high likelihood of echoes arriving at the receiver outside the guard interval. For a demodulator that depends only on the ISI avoidance or at least a reduction provided by the guard interval, only paths arriving to within $\pm T_g$ seconds of the main path can be observed and equalised. Paths that lie outside this range and are therefore not seen can cause problems depending on their relative time of arrival (TOA) at the receiver. These problems are outlined below, with reference to Figure 2.

### 3.1. Inter-symbol Interference (ISI)

Any path whose TOA lies further than $T_g$ seconds before or after the main path would cause ISI with respect to the main path in the receiver. This is shown in Figure 2. In this schematic illustration, the time domain signal sample sequence arriving at the receiver along a given path is represented as a rectangular band. The power of the signal for each path is proportional to the height of the rectangular band that represents the signal sample sequence for the given path. Of course, the receiver would see the sum of the two - not separate sample sequences as shown in Figure 2. The shaded segments show the guard interval with the shaded areas on the left being the guard interval whilst areas of same shading to the right are the samples that were copied from the end of the symbol to form the guard interval at the transmitter. To make the picture a little clearer, the impulse response for each channel is also shown above the schematic sample sequences.

Figure 2(a) shows a channel with two paths, with the path of lower amplitude (the echo path) arriving at the receiver $T_g$ seconds after the main path. Compare this with Figure 2(b) in which the echo arrives at the receiver $T_g + \tau$ seconds after the main path. In this case, even with the best choice of window for the demodulator's FFT, the demodulator still ends up with ISI of duration $\tau$ seconds due to the echo energy from the previous symbol leaking into the current symbol's FFT window. Indeed, as illustrated in Figure 2(c), if the channel impulse response (CIR) is made up of more than two paths, then all paths have to arrive within $T_g$ seconds of each other to avoid ISI. In general therefore, performance will always be degraded by some ISI when all paths do not arrive within the duration of the guard interval. In each case, the amount of ISI caused depends on the power of the path(s) that arrive outside the guard interval but also on their relative TOA (such as $\tau$ in Figure 2(b)) when compared to the guard interval duration.

### 3.2. Corruption of Channel Estimation

In OFDM systems pilots are embedded into the transmitted spectrum for use in channel estimation [3]. The channel is estimated by computing $P(k)$ the channel transfer function (CTF) across all the carriers. The CTF is used to improve detection and recovery of the data to be recovered. As will be explained, the CTF is used to improve the estimate of the SST with respect to minimising the ISI caused by multi-path propagation.

For each received carrier $R(k)$, we can estimate the transmitted symbol $C(k)$ as:

$$C(k) = \frac{R(k)}{P(k)}$$

where $k = 0,1,2,...,N_u\text{-}1$ where $N_u$ is the number of sub-carriers in the OFDM system.

In a DVB-T symbol for example, the (scattered) pilot carriers that are used for channel estimation at the demodulator are spaced 12 carriers apart. The value of the CTF at these pilot carrier positions can be computed by dividing the value of each received pilot by its known value. The result of this for a given OFDM symbol is a 12-fold decimated version of the CTF designated as $P_{12}(k)$. The pilot carriers are distributed between successive OFDM symbols in a manner that allows easy reduction of this spacing to 3 carriers apart by use of interpolation along the time dimension [3] or other estimation schemes. These techniques can be applied to successive estimates of $P_{12}(k)$ to get $P_3(k)$ which is a 3-fold decimation of the CTF estimate. The full CTF $P(k)$ can then be computed by applying a 3-fold interpolation along the frequency axis on $P_3(k)$. The sequences $P_{12}(k)$ and $P_3(k)$ can be described in equation form as:

$$P_{12}(k) = \begin{cases} R(k) \big/ P_c(k) & k \bmod 12 = 0 \\ 0 & otherwise \end{cases}$$

$$P_3(k) = \begin{cases} P_{12}(k) & k \bmod 12 = 0 \\ P_I(k) & k \bmod 3 = 0 \\ 0 & otherwise \end{cases}$$

where $P_c(k)$ is the known value of the transmitted pilot at carrier $k$ and $P_1(k)$ is the result of interpolation in the time dimension (or other estimation scheme) on $P_{12}$ from neighbouring symbols at carrier $k$.

The CTF estimate $P(k)$ is only resolvable to one third of the system bandwidth since for any channel with delay spread longer than $T_u/3$ seconds, the 3-fold decimated $P_3(k)$ would spectrally fold and so alias the CTF [3] at half of its Nyquist bandwidth of $T_u/6$ seconds. Since the CTF does not alias for channels with a delay spread of less than $T_u/3$ seconds, only such channels can be optimally estimated and equalised. Consequently, any channel whose paths do not all arrive within this theoretical limit of $T_u/3$ seconds such as channels in a sparse SFN cannot be optimally estimated. Indeed, even channels with delay spreads of more than $T_u/6$ (half the resolvable bandwidth) but less than $T_u/3$ seconds must be treated with care to achieve optimum channel estimation.

## 4. Receiver With Symbol Time Tracker

To reduce the ISI introduced by radio channels with delay spreads longer than the guard interval duration, and/or improve the CTF estimation, an estimate of the TOA of all paths (relative to the main path) that lie both within and outside the guard interval is needed. In our co-pending UK patent applications [1] a receiver is disclosed, which is arranged to provide symbol time acquisition based on an adaptive matched filter whose taps are updated every symbol from the samples in the guard interval. Symbol time acquisition and tracking (STAT) is composed of an acquisition phase during which a coarse symbol start time (SST) is determined. This allows the FFT and frequency processing of the received signal to proceed in order to provide pilot information for use in timing and carrier frequency recovery loops. When these loops have converged, the STAT starts to track out any errors in the SST taking into account the relative powers of the echoes present, their respective TOAs and the delay spread (CIR span) of the channel. Thus the STAT operates in two modes: a time domain based tracker which uses a guard interval adapted matched filter (MF) to estimate and then track the CIR by finding the TOA of all paths that lie within $\pm T_g$ seconds of the main path; and a frequency domain tracker which derives the CIR from an IFFT of the decimated CTF $P_3(k)$ provided by the channel estimator.

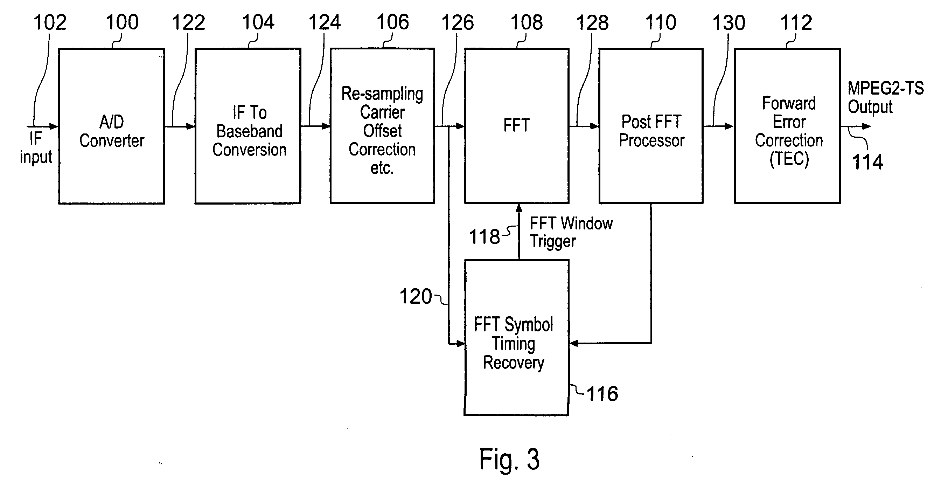

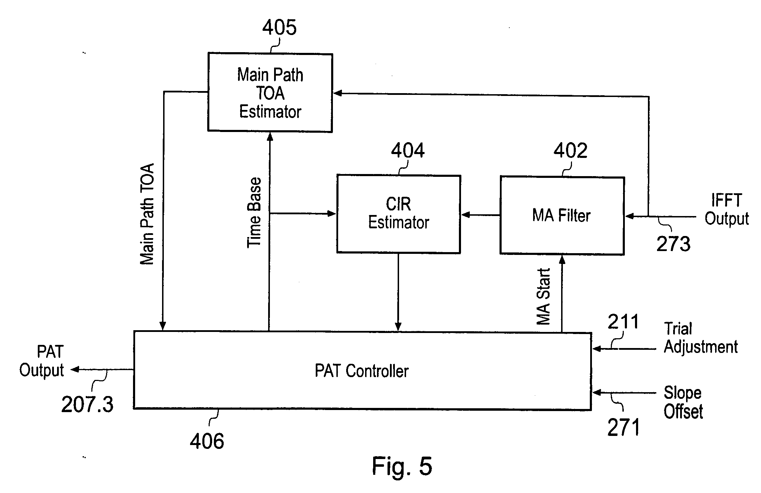

Embodiments of the present invention will be described with respect to the receiver disclosed in [1]. More particularly, an adaptation of the receiver disclosed in [1] to mitigate or at least reduce the effects of detecting and recovering data in the presence of CIR delay spreads of greater than the guard interval, will be described with reference to Figures 3, 4, 5, 6 and 7. Accordingly, the receiver disclosed in [1] will be described in the following paragraphs, followed by an explanation of how the receiver is adapted to form an embodiment of the invention in section 5.

A receiver for detecting and recovering data from for example a COFDM symbol, is shown in Figure 3. In Figure 3 an analogue to digital converter 100 is arranged to receive an intermediate frequency (IF) signal representing the detected radio signal on which the COFDM symbol has been modulated. The receiver also includes down conversion means and detection means in order to convert the radio frequency signal into an intermediate frequency signal, which is fed to the analogue to digital converter 100 via an input 102. Thus it will be appreciated that the receiver may also include radio frequency receiving and down converting means which are not shown in Figure 2. After being analogue to digitally converted the received signal is processed by an intermediate frequency to base band conversion means 104 before being processed by a re-sampling and carrier offset correction processor 106. The re-sampling and carrier offset correction processor 106 is arranged to track in the frequency domain the K carriers of the COFDM modulation. The base band received signal samples are then fed to a Fast Fourier transform processor 108 which serves to convert the time domain received signal samples into the frequency domain. The data is then recovered from the frequency domain signal samples by a post FFT processor 110. The data is then fed to a forward error correction processor 112 which operates to decode the error correction encoded data to produce the recovered data at an output 114.

The receiver according to this example embodiment provides a synchronisation detector, which locates the FFT window from which the data bearing signal samples are processed by the FFT processor 108. The FFT window position is adjusted in order that the window includes the maximum energy representative of the data bearing signal samples. To this end an FFT symbol timing recovery processor 116 is arranged to generate a signal indicative of a symbol sync time which is fed to the FFT processor 108 via a connecting channel 118. The FFT symbol timing recovery processor 116 is arranged to detect the symbol sync time from the received set of signal samples which represent each COFDM symbol. These are received from the re-sampling and carrier offset correction processor 106 via a connecting channel 120.

### 4.1. Symbol Time Tracker

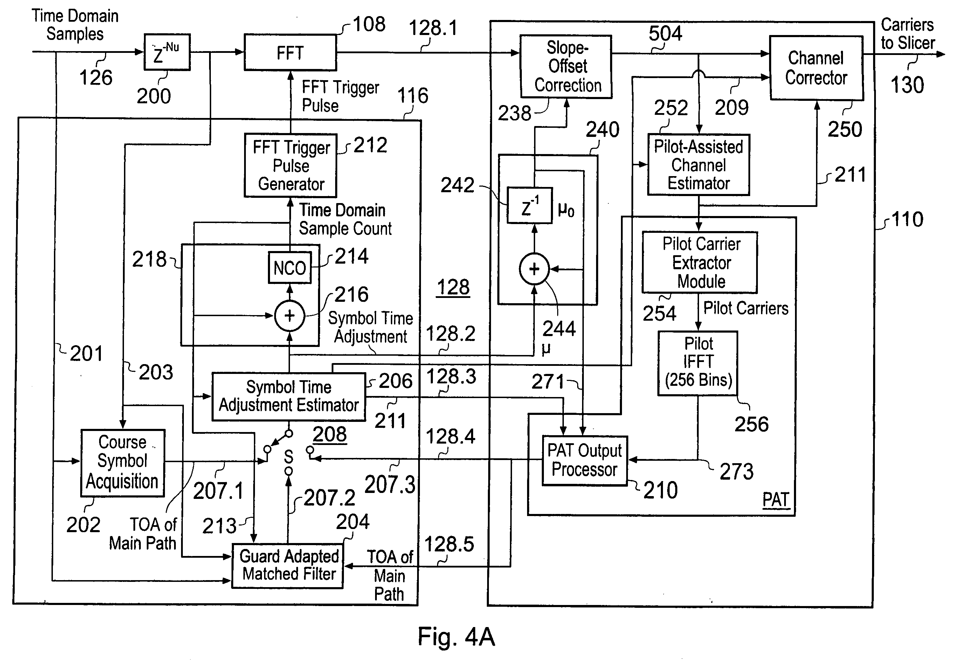

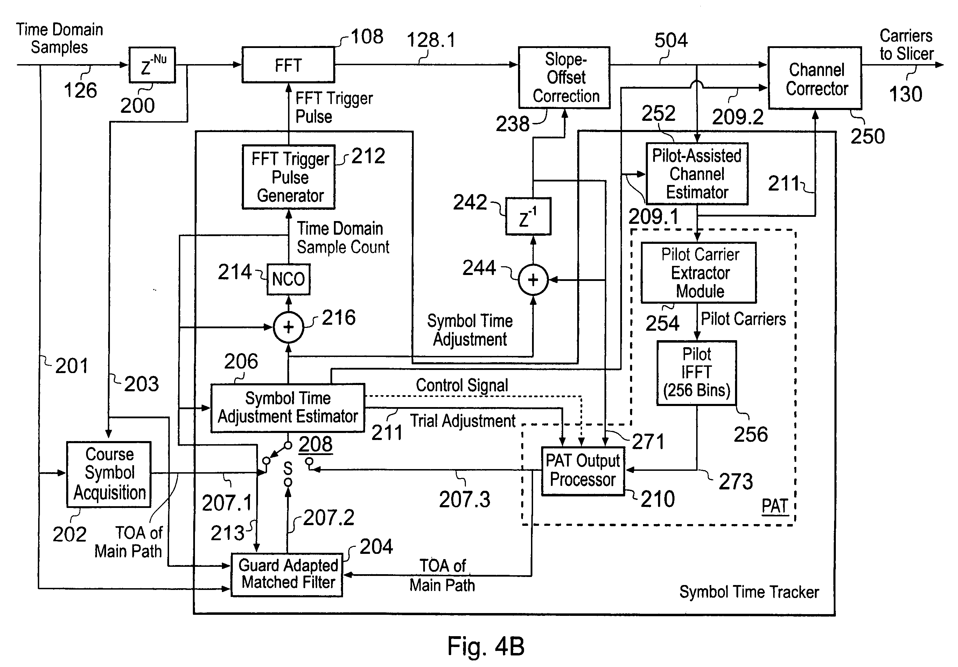

The FFT symbol-timing recovery processor 116 and the post-FFT processor 110 are shown in more detail in Figures 4A and 4B. The FFT symbol-timing recovery processor 116 and the post-FFT processor 110 in combination provide a symbol timing recovery process, which is described in [1]. In order to understand and appreciate the advantages provided by embodiments of the present invention, the Symbol Time Tracker disclosed in [1] will be described in this section.

The symbol time recovery process is performed by a Symbol Time Tracker which is shown in Figure 4B as being formed from parts of the FFT symbol-timing recovery processor 116 and the Post FFT processor 110.

In Figure 4A and 4B, the time domain samples representing the COFDM symbol are received at a delay unit 200. After being delayed by $N_u$ samples, the time domain samples are fed to the FFT processor 108. The FFT processor 108 converts the time domain samples into the frequency domain. The frequency domain samples are then fed to the post-FFT processor 110. The time domain samples received from the channel 126 are also fed to a coarse symbol acquisition processor 202 and guard adapted matched filter processor 204. The delayed samples from the output $N_u$ delay unit 200 are also feed to a second input of the coarse symbol acquisition processor 202 and the guard adapted filter 204.

Also forming part of the FFT symbol-timing recovery processor 116 is a symbol time adjustment estimator 206 having an input which is selectable from one of three sources via a switch 208. The three sources are the output of the coarse symbol acquisition processor 202, an output of the guard adapted match filter 204, and an output from a Pilot Assisted Tracker (PAT) PAT. The three sources respectively feed signals to three inputs to the switch 208 on respective channels 207.1, 207.2, 207.3.

The symbol timing adjustment estimator 206 is arranged to adjust the SST at which the FFT processor 108 performs an FFT on the received signals in order to recover data from the COFDM signal symbol. In order to do this, the symbol-timing recovery processor 116 is also provided with an FFT trigger pulse generator 212. The trigger pulse generator is arranged to receive a signal providing an indication of the sample count, which corresponds to the symbol timing via a numerically controlled oscillator 214. SST tracking is effected by using adder 216 to add sample count adjustments from the symbol time adjustment estimator 206 into the NCO 214. This symbol count adjustments are derived by the symbol time adjustment estimator 206 based on inputs from a digital tracking loop composed of the PAT 210 (in association with some blocks of the post-FFT processor 110) and the guard adapted matched filter 204. The digital tracking loop is therefore arranged in combination with the symbol time adjustment estimator 206 to adjust the FFT trigger point in accordance with the current SST by use of the PAT (in association with some blocks of the post-FFT processor 110) and/or the guard adapted matched filter 204.

As will be explained, the symbol time adjustment estimator 206 determines the SST with respect to the CSST by selecting an adjustment value provided by either the coarse symbol acquisition processor 202, the guard adapted filter processor 204 or the PAT.

The PAT is comprised of elements 252, 254, 256 which form the pilot assisted channel estimate and a PAT output processor 210 which processes this channel impulse response estimate. The PAT generates an adjustment to the SST from an estimate of the TOA of the main path in the channel impulse response. This is generated from a channel impulse response estimate generated from the pilot symbols as has already been explained. The channel impulse response estimate is generated by the post-FFT processor 110. The post-FFT processor 110 includes a slope offset correction processor which receives the frequency domain samples from the input channel 128.1. The slope offset correction processor receives a second input from the output of the time adjustment estimator via a digital slope integrator 240 formed from a delay element 242 and an adder 244. The slope offset correction processor 238 is arranged to adjust the phase shift in the frequency domain signal samples in order to maintain phase continuity of the pilot carriers in the event of SST adjustments. This phase continuity is required for other blocks within the post-FFT processor. The output of the slope offset correction processor 238 is fed to a channel corrector 250 and a pilot-assisted channel estimator 252. A pilot carrier extractor module 254, and a pilot IFFT processor 256 are provided in order to generate the pilot assisted CIR. Parts of the symbol time recovery processor 116 and the post-FFT processor 110 will be explained in more detail in the following sections.

### *4.2. Pilot Assisted Channel Estimation*

As explained above the PAT requires a pilot assisted CIR estimate in order to generate an adjustment value to the SST. The pilot assisted channel estimation is provided as part of the Post FFT processor 110. The parts, which form the pilot assisted channel estimate, are as follows:

> **Pilot-Assisted Channel Estimator 252** operates on the frequency domain carriers from the **FFT** block 108 after they have gone through the **Slope-Offset Correction** block 238. From amongst all the carriers, the pilot carriers are identified and extracted. There are only a limited number of pilot carriers per COFDM symbol - spaced nominally every 12 carriers. Since the amplitudes and phases of pilot carriers are known, the channel transfer function (CTF) at the respective pilot frequencies can be computed by dividing each received pilot (phase & amplitude) with its expected value. For each COFDM symbol, the channel estimator now has samples of the CTF every 12 carriers. Next the channel estimator combines these CTF estimates over a number of successive COFDM symbols. There are various ways of doing this but the general effect is that it enables the channel estimator to increase the CTF sample rate to every 3 carriers. The last thing the channel estimator does is to interpolate the CTF by a factor of 3 so that a CTF estimate is provided for every carrier. Within the Post FFT processor, these CTF estimates are sent to the **Channel Corrector** block 250

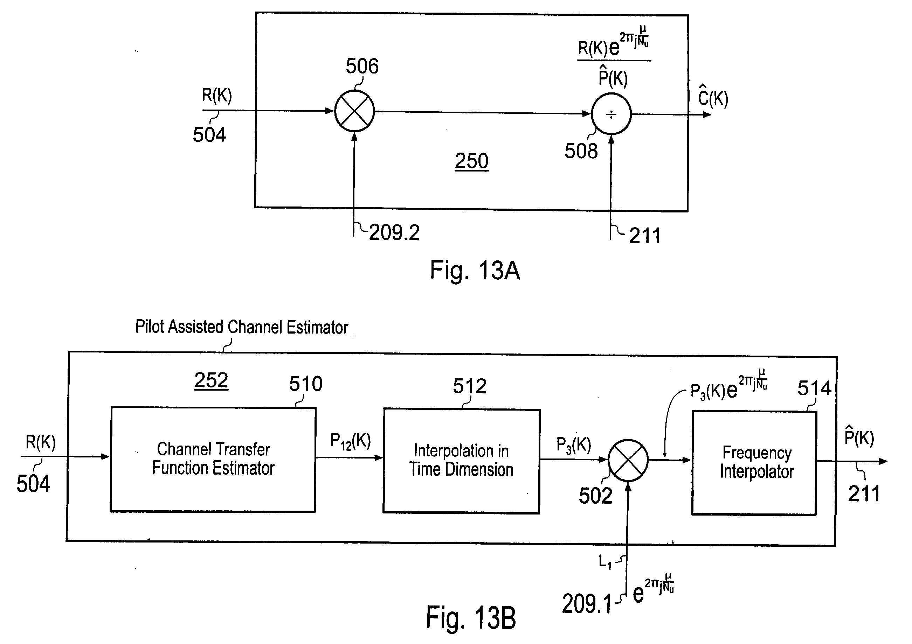

where they are used to equalise the effect of the channel on the data carriers as explained in more detail shortly with reference to Figures 13A and 13B. They are also sent outside of the Post FFT processor to the **Pilot Assisted Tracker (PAT).** The PAT is composed of the following blocks:

> **Pilot Carrier Extractor Module 254:** The channel estimator provides CTF estimates for all carriers in the COFDM symbol. This block extracts only those CTF estimates at the pilot carriers actually, only 256 contiguous CTF estimates are extracted.
> **Pilot IFFT 256:** This block does a 256-point inverse FFT on the 256 CTF estimates provided by the **Pilot Carrier Extractor Module 254.**

### *4.3. Pilot Assisted Tracker (PAT) Output Processor*

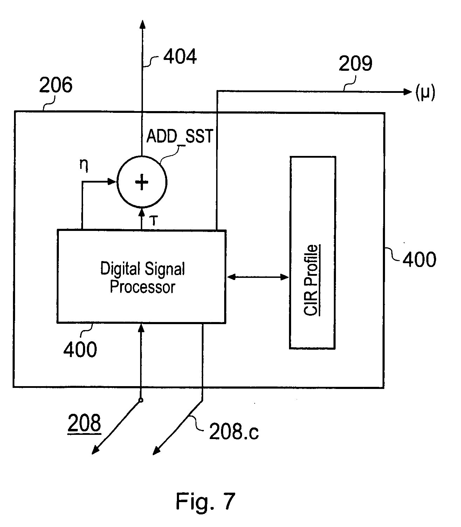

Figure 7 provides a block diagram of the PAT Output Processor 210 in more detail. The PAT Output Processor is comprised of the following processing blocks:

> **Moving Averaging (MA) Filter 402:** This block estimates the time domain impulse response of the channel from the Pilot IFFT output signal. This block has a second input from the PAT controller 406 which indicates the bin of the IFFT from which to start the MA filter window. The MA forms an output signal by integrating the energy within a window whose length in IFFT bins is the same as the duration of the guard interval. For each shift of the window, a new output is produced.
> **CIR Estimator 404:** This block estimates the start time of the time domain impulse response of the channel from the output of the MA filter. This start time is the filter output index for which the filter output is maximum. This start time is estimated relative to either the start time of the old CIR (the current time base) or a trial start time provided by the symbol time adjustment estimator block 206.
> **Main Path TOA Estimator 405:** When enabled, this block finds and outputs the number of the IFFT bin with maximum energy relative to the bin number associated with the current time base. This block takes as its input the output buffer of the IFFT and the current time base from the PAT controller 406.
> **PAT Controller 406:** The PAT controller 406 controls all the PAT output processor sub-blocks. It converts the slope offset at input 271 from samples to IFFT bins to determine the current time base or converts the trial adjustment input 211 into bins to give a reference to the CIR Estimator block 404. It also determines from the current time base or the trial adjustment bin the start bin number of the IFFT input for the MA filter. Finally, it incorporates a switch to determine whether the output of the PAT is to come from the Main path TOA estimator 405 or the CIR estimator 404. The PAT controller can therefore force the PAT output processor 210 to operate in different modes. The different modes are altered by a control signal received from the symbol timing adjustment estimator 206. Specifically, since the CIR start time from the CIR Estimator 404 is computed relative to a time base provided by the PAT controller, the PAT controller can cause the CIR Estimator 404 to output the time of arrival (TOA) of any of the propagation paths that exist in the transmission channel. In another mode of operation the PAT controller, when given a prospective TOA, can determine whether or not there exists a path on the channel with the given TOA. It can do this by providing the CIR Estimator 404 with the test TOA as a time reference. If the path exists, then the CIR Estimator 404 would produce a CIR relative start time close to zero.

### 4.4. Symbol Time Adjustment Estimator

The symbol time adjustment estimator effectively utilizes adjustments to the CSST as generated from the coarse symbol acquisition processor 202, the guard adapted matched filter processor 204 or the PAT output processor 210. Correspondingly the switch 208 is arranged to receive an input from either the coarse symbol acquisition processor 202, the output of the guard adapted match filter 204 or the PAT 210 from the respective connecting channels 207.1, 207.2, 207.3.

In the first symbol time tracking period (after all timing and frequency loops have locked), the symbol time tracker runs the PAT asking it to provide only the TOA of the main path. The main path TOA goes to the guard adapted filter processor 204 where it is used to set up the taps and excitation of the matched filter for the next symbol-tracking period. The main path TOA also goes to channel 207.3 of the switch 208 from where it proceeds to the symbol time adjustment estimator 206. This block uses the switch output to find the adjustment that needs to be made to the symbol sample counter or *NCO* 214. When the value in this counter reaches a preset value, the FFT Trigger Pulse Generator 212 generates a start pulse for the *FFT* block 108. The switch 208 contact moves to channel 207.2 in readiness for the next tracking period. The Guard adapted filter processor 204 accumulates its output for a preset number of COFDM symbol periods. At the end of this period, it outputs an 'earliest path TOA' to channel 207.2 of switch 208 and so on to the symbol time adjustment estimator 206 which uses this value to compute the required adjustment to the *NCO* 214. If this required adjustment is greater than a preset value, (referred to as a variable name JITTER), then the PAT is summoned to test the 'earliest path TOA' to determine if there is a valid propagation path with this TOA. When the PAT is summoned to test a prospective TOA, the switch 208 contact moves to channel 207.3. If the test is in the affirmative, the PAT output processor 210 regurgitates the 'earliest path TOA' which it tested and so the symbol time adjustment estimator 206 picks it up and allows the *NCO* 214 adjustment to be made via adder 216. If the test fails, the PAT output processor 210 outputs a zero which results in a zero adjustment in the symbol time thereby disallowing the adjustment.

### 4.5. Coarse Synchronisation Detector

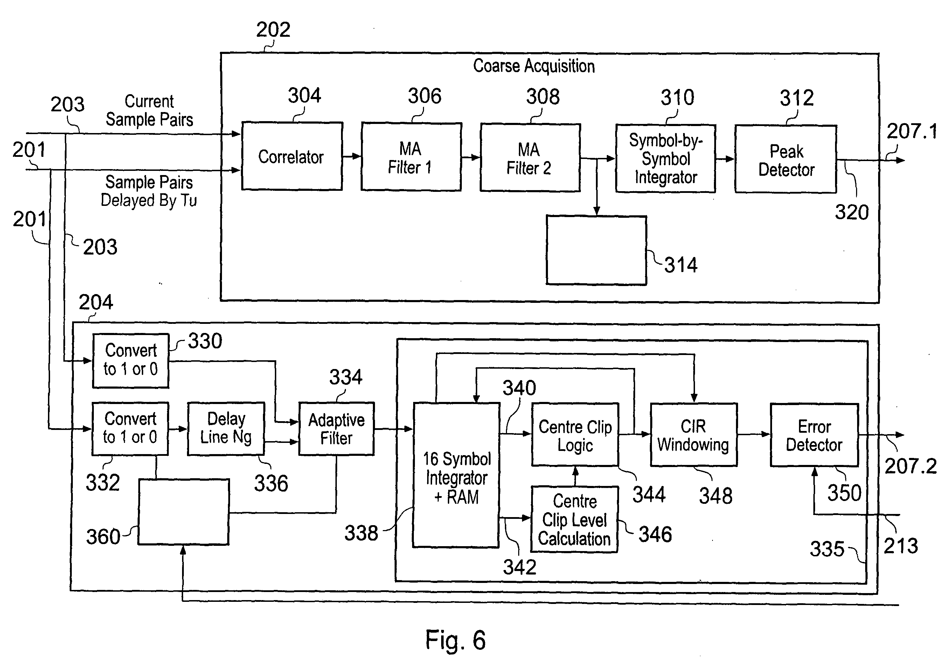

As shown in Figure 6 the coarse acquisition processor comprises a correlator 304 which is arranged to receive the set of received signal samples corresponding to the COFDM symbol via a first input 203. The set of received signal samples are also received via a second input 201 but delayed by a period $T_u$ corresponding to the temporal length of the data bearing signal samples of the COFDM symbol. The correlator 304 is arranged to cross correlate the two signal samples from the received signal. The correlator 304 then feeds the result of the correlation to a first Moving Averaging (MA) filter 306, which integrates the output of the correlation. This is in turn fed to a second moving averaging filter 308 which integrates the output of the first moving averaging filter. The output of the second moving averaging filter 308 is then integrated on a symbol by symbol basis by a symbol-by-symbol integrator 310. The integrator 310 serves to integrate the output signal from the second MA filter 308 over successive COFDM symbols so that a combined output is produced for these successive symbols. The output of the integrator 310 is then fed to a peak detector 312. The peak detector 312 is arranged to generate a peak value of the symbol integrator. A peak detector 312 then determines the relative displacement which corresponds to the peak of the integrated output signal from the integrator 310 therefore providing a coarse indication of an SST point to the symbol timing adjustment estimator 206.

### 4.6. Guard Adapted Filter Processor

The *Guard Adapted Matched Filter Processor* 204 operates on the time domain samples prior to the *FFT* block 108. It matches $N_g$ samples on the delayed sample stream with *Ng* samples from the undelayed sample stream. The delayed and undelayed sample streams are taken from the output and input of the *Delay* block 200, respectively.

The guard adapted filter processor 204 determines an adjustment to the CSST from an 'Earliest Path TOA' which is used by the symbol time adjustment estimator 206 and also another value, which is used by the channel corrector block.

The guard adapted matched filter processor provides an improved estimate of the SST by utilising a transversal filter which is adaptively matched to the guard interval of successive COFDM symbols. An end of symbol marker is derived for the dominant multi-path component from the main path TOA provided by the PAT output processor 210. This is used to locate the start of the guard interval due to the main path on each symbol. For symbol $m$, the received samples either side and including its guard interval, comprising $3N_g$ samples, are used to set the taps $f_m(i)$ of the transversal filter. In effect, therefore the received signal is correlated with respect to $N_g$ worth of samples. This therefore allows the guard adapted matched filter tracker to estimate any errors in the CSST. Once the filter taps have been set the block $r_m(n)$ of the last $N_g$ samples of the symbol, which were copied to form the guard interval are filtered by the matched filter to produce an output signal. As the filter is excited with these samples, a pulse train $h_m(n)$ representing an approximation to the channel impulse response (CIR) during symbol $m$ is produced at the output since the filter is nominally matched to its excitation. This is represented by the following equation:

$$h_m(n) = \sum_{i=0}^{N_g-1} f_m(n-i) r(n-i)$$

The guard adapted matched filter processor 204 is also arranged to receive the set of received signal samples and the delayed set of received signal samples from the first and second inputs 201, 203. The received signal samples from the first and second inputs 201, 203 are fed respectively to first and second binary converters 330, 332. The output from the binary converter is fed to a first input of an adaptive matched filter 334 to provide the filter excitation. A second input to the adaptive matched filter is fed with samples from the output of the binary converter 332 via a delay line 336 which serves to delay each sample by a period corresponding to the number of samples within the guard period. This input provides the taps of the filter. The output of the adaptive matched filter 334 is received at an integrator 338 forming part of a synchronisation detection processor 335. The integrator 338 serves to integrate the output of the matched filter on a symbol-by-symbol basis, the integrated output being presented on first and second outputs 340, 342 to a centre clip processor 344 and a centre clip level calculator 346. As explained in [2], the centre clip processor and the centre clip level calculator 344, 346 are arranged to pre-process the output of the adaptive matched filter which has been integrated by the integration processor 338. The effect of cancelling various peaks of the adaptive filter output reduces the possibility of a false indication of the synchronisation point. As such the performance of the synchronisation detector 335 is improved particularly in the presence of noise.

The pre-processed output from the centre clip processor is then fed to a channel impulse response windowing processor 348. The windowing processor 348 provides a further pre-processing operation to the effect of isolating an analysis window within which the pre-processed output of the adaptive filter produces the maximum energy. It is from the start of this analysis window that a peak output of the adaptive matched filter is determined by an error detection processor 350 with respect to the current time base derived from the current value of the NCO 214 through a feedback channel 213. The operation of the guard adapted matched filter processor 204 is controlled by a controller 360.

The error detector 350 produces an adjustment to the CSST which is fed to channel 207.2 of switch 208 and selected as appropriate by the symbol timing adjustment estimator 206. The pre-processing operations performed by each of these processors are explained in more detail in [2]. A further description of the operation of the symbol time adjustment estimator supported by flow diagrams is disclosed in [1].

## 5. Adaptation of the Receiver and Symbol Time Tracker

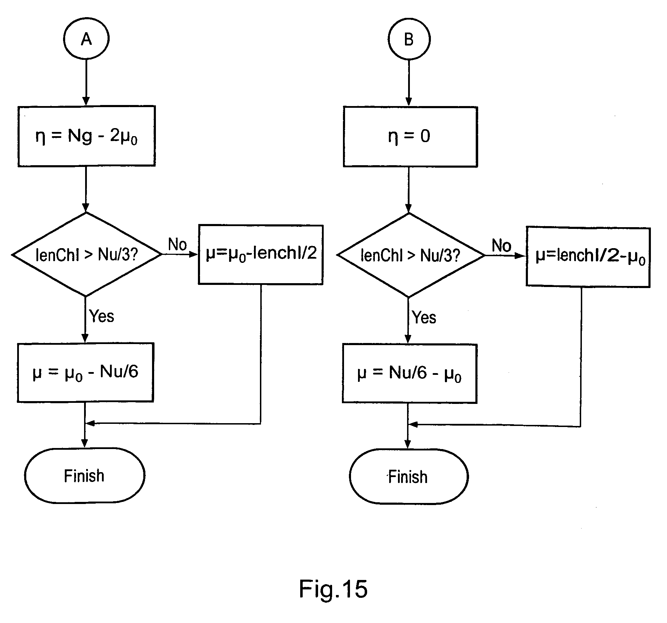

In order to reduce the effects of ISI caused by the presence of propagation paths having delays which are outside the guard interval, the Symbol Time Tracker described above is adapted to include a Symbol Start Time (SST) adder ADD_SST. The SST adder ADD_SST is arranged to introduce an offset value $\eta$, which is calculated by the Symbol Time Adjustment Estimator 206 according to the flow charts in Figure 15. Optionally, in order to improve the CTF estimate generated by the PAT, the Post-FFT Processor 110 may also include a pilot carrier spin processor P_SPIN. The improved estimate of the CTF provides a more optimum removal of the channel impulse response from the data at divider 508. An example of the Symbol Time Adjustment Estimator 206 embodying the present invention is illustrated in Figure 7. In Figure 7 the Symbol Time Adjustment Estimator 206 comprises a digital signal processor 400, an SST adder ADD_SST and a CIR store **CIRProfile.** As will be explained, the SST adder ADD_SST receives an adjustment time $\eta$, via a connecting channel 209.1, which is calculated by the digital signal processor of the symbol time adjustment estimator 206. The adjustment time $\eta$ is calculated using the CIR profile built up by the symbol time adjustment estimator 206 in the CIR store **CIRProfile**. The symbol time adjustment estimator also calculates a phase

spin μ, which is fed via a connecting channel 209 to the channel corrector 250. The channel corrector 250 then applies the spin adjustment to the estimated carriers $P_3(k)$ in order to improve the estimate of the CTF. The operation of the adapted receiver and symbol time tracker will now be explained in the following paragraphs.

### 5.1. Detecting paths outside the guard interval

The symbol time tracker disclosed in [1] is arranged to track paths which lie within $\pm T_g$ seconds of the main path. The MF therefore only runs whilst within $\pm N_g$ samples of the expected location of the samples that should match the guard interval at the end of each symbol. By matching the guard interval over $\pm wN_g$ samples of this location where $w>1$, paths that reach the receiver to within $\pm wT_g$ seconds of the main path can also be detected and tracked.

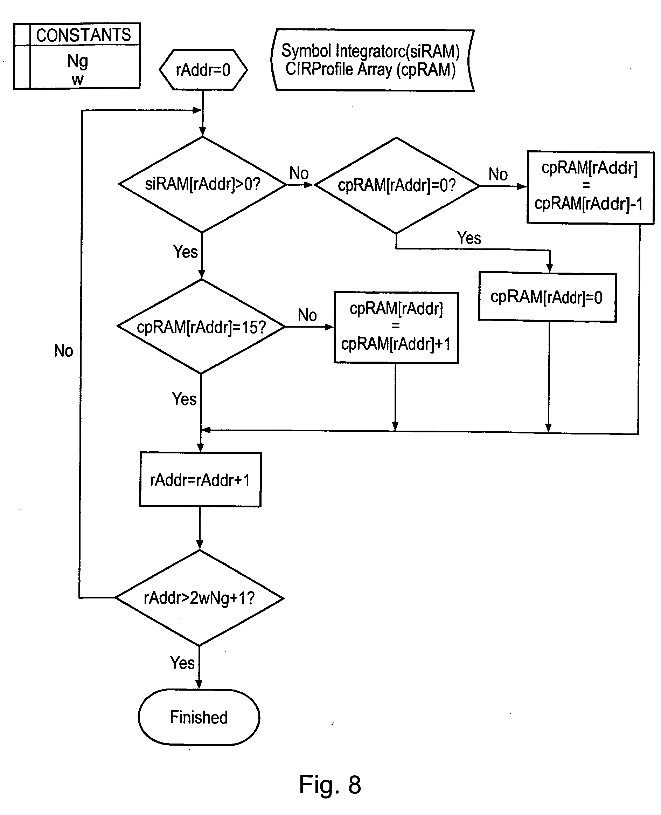

To assist the symbol tracker in the identification of paths present in the multi-path profile defining the CIR, an array of samples is maintained which is used to provide a history of sample values of the CIR. From the onset of symbol tracking an array of length $2wN_g + 1$ samples **CIRProfile** is used to store all paths in the channel over successive symbols. The samples **CIRProfile** are stored in the CIR store shown in Figure 7. After the noise-rejection processing of the MF symbol integrator output, a record of the presence/absence of residual energy at each symbol integrator RAM location is taken and accumulated into this array according to the process shown in the flow chart of Figure 8.

To find the relative TOA of all paths in the channel, a scan of the CIR store **CIRProfile** array from $m=0$ to $2wN_g$ for values greater than a fixed threshold of 7 is done. For each array index $m$ if **CIRProfile**$[m] > 7$, then a path has been found. For each such path the following determination can be made:

If $(w\text{-}1)N_g \leq m \leq (w\text{+}1)N_g$ then the path is an in-guard path i.e. the path arrived at the receiver to within $\pm T_g$ seconds of the main path.

If $m > (w\text{+}1)N_g$ then the path is an off-guard post-echo i.e. the path arrived at the receiver more than $T_g$ seconds <u>after</u> the main path.

If $m < (w\text{-}1)N_g$ then the path is an off-guard pre-echo i.e. the path arrived at the receiver more than $T_g$ seconds <u>before</u> the main path.

### 5.2. Improving ISI performance with paths outside the guard interval

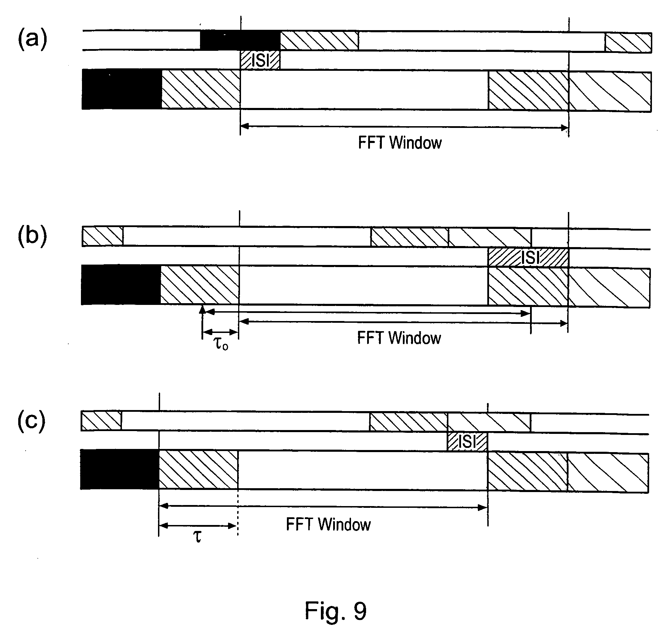

Figure 9(a), (b) and (c) illustrate the ISI problem for a main path and a single echo. Figure 9(a) illustrates the situation when there is an off-guard post-echo path on the channel. Here the default window for the FFT starts at the end of the guard interval (of the main path) and finishes at the end of the symbol. There is not much that can be done to mitigate the ISI in this case as the default FFT window is also optimum for minimum ISI. The ISI arises from the part of the echo path closest to the SST.

Figure 9(b) illustrates the situation when an off-guard pre-echo path is present on the channel. Here, the default FFT window based on the main path produces a bad ISI outcome with the ISI occurring at the end of the FFT window. Since an off-guard pre-echo can be detected ($m < (w\text{-}1)N_g$), a better ISI outcome can be achieved by changing the FFT window to that shown in Figure 9(c). This can be done by pulling back the SST by as much as is possible whilst bearing in mind the current in-guard CIR spread. The in-guard CIR spread needs to be considered otherwise the SST might be pulled too far back and cause ISI from any post-echoes present. It will be explained later how this is accomplished. Note that in each case of Figure 9(c) since the echo path attenuation (the height of the echo rectangle) is the same, the amount of ISI is proportional to the length of the hashed rectangle.

### 5.3. Improving channel estimation performance

In DVB-T demodulators, the final stage of channel estimation is the 3-fold interpolation of the estimated channel transfer function (CTF) $P_3(k)$ to give the full-band CTF estimate $P(k)$. For this interpolation, a so called frequency interpolation filter is used, which forms part of the channel corrector 250. Even though optimum equalisation can be achieved only for paths whose TOAs lie within the guard interval, the bandwidth of the frequency interpolation filter in the channel estimator can be as wide as $Tu/3$ seconds [3]. The frequency interpolation filtering process is a convolution of the time response $h(t)$ of a low-pass FIR filter of order $2M$ with the decimated estimate of the CTF - $P_3(k)$. Considering the duality of time and frequency, this filtering operation is equivalent to windowing the impulse response of the channel $p(t)$ with the transfer function $H(f)$ of the frequency interpolation filter - as shown in the following equation with $k$ being the carrier index and $P(k)$ the interpolated CTF estimate at carrier $k$:

$$P(k) = \sum_{i=-M}^{M} P_3(k+i)h(M+i) \equiv F\{p(k)H(k)\}$$

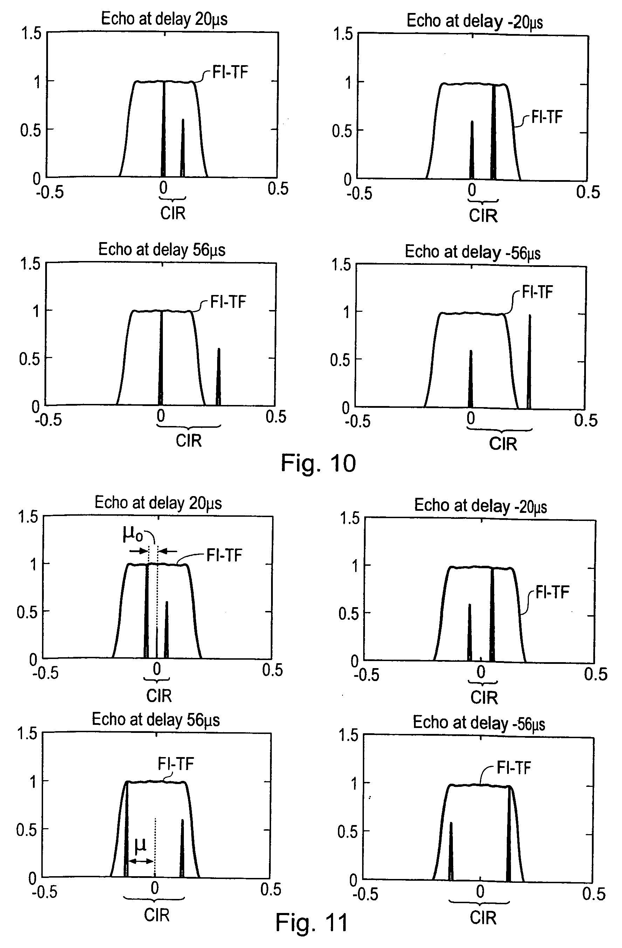

where $F\{.\}$ represents the Fourier transform, $p(.) = F^{-1}\{P_3\}$ is the time domain impulse response of the channel whilst $H(.)=F\{h\}$ is the transfer function of the frequency interpolation filter. The right-most part of this equation gives another way of interpreting the fact that it is possible to optimally estimate any channel in which all paths arrive within a time interval of $Tu$/3 seconds. Here, $H(k)$ is the window whilst $p(t)$ is the signal being windowed. As the filter $h(t)$ has bandwidth $Tu$/3 seconds so the window $H(k)$ has length corresponding to $Tu$/3 seconds. Thus for signals to be windowed such as $p(t),$ their duration must be no more than $Tu$/3 seconds to fully lie under window. This is illustrated in Figure 10, where the time domain Channel Impulse Response (CIR) is shown with respect to the Frequency Interpolator Transfer Function FI-TF. Consequently, for channel delay spreads longer than $Tu$/3 seconds, channel estimation cannot be optimal, as not all the useful energy of the signal would lie under the window. Furthermore, for any system with guard interval $\Delta Tu < Tu$/3, there is still some allowance under the frequency interpolation filter window to improve the channel estimation for echoes that arrive just outside the guard interval.

In operation however, the Symbol Time Tracker normally concentrates on optimally equalising only echoes within the guard interval. In such operation, the first impulse of the equalisable CIR generally coincides with the centre of the frequency interpolation filter transfer function (FI-TF) window $H(k)$. This can be seen in the upper plots of Figure 10 which is based on a 2K, $Tu$/4 guard interval system. In the lower plots of Figure 10, the echo is right at the guard interval and so can be optimally equalised. In this case however, the impulse due to this echo falls outside the window $H(k)$ and so would impede optimum channel estimation. As the MF tracker also provides the measured in-guard CIR delay spread $2\mu_0,$ this can be used to centre the CIR under the FI-TF window. Figure 11 shows the centring of all the CIRs of Figure 10. Figure 11 also provides an indication of the relative values of $\mu = \mu_0$ which are applied in order to perform the centring of the CIRs. Centring is done by applying a phase spin derived from $\mu = \mu_0$ (where $\mu_0$ in samples is half the CIR delay spread) to the decimated CTF $P_3(k)$ prior to frequency interpolation. This adjustment is performed by the channel estimator 252 and corrector 250 and is shown as the complex multipliers 502 and 506 in Figure 13A and Figure 13B, respectively. With a given spin from $\mu$ samples, the time-frequency duality equation above becomes:

$$R(k) = \sum_{i=-M}^{M} P_3(k+i)e^{j2\pi\mu/N_u}h(M+i) \equiv F\{p(k+\mu)H(k)\}$$

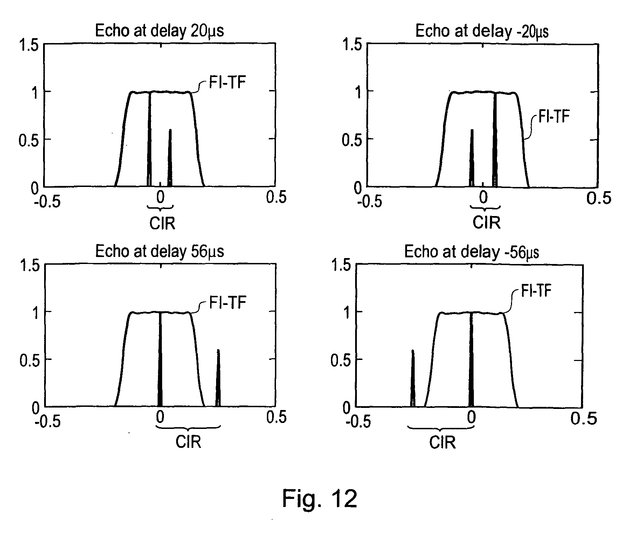

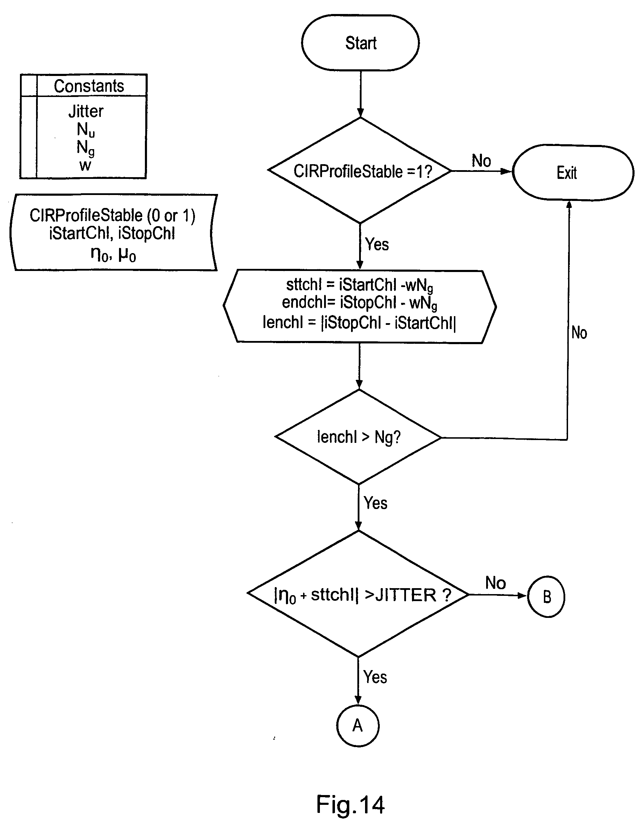

This idea of spinning the pilot carriers prior to frequency interpolation can be used to improve the performance of the frequency interpolation stage of channel estimation even when echoes arrive at the receiver outside the guard interval. Firstly however, Figure 12 shows the appearance of echoes that arrive outside the guard interval at the input of the (pilot) frequency interpolation filter for a DVB-T 2K, $Tu$/8 guard interval system. Here, the $\pm$20us echoes lie within the guard interval of 28us and so are both detected and the CIR is centred as usual. The $\pm$56us echoes in the bottom plots however lie 2Tg seconds away from the main path. In normal operation, the STAT would not be looking for echoes more than the guard interval away from the main path. Consequently, these channels will be seen as single path channels and so the off-guard echoes would fall outside the FI-TF window significantly degrading the frequency interpolation stage of the channel estimator. However, as the window has enough bandwidth to correctly manage these echoes, a $\mu$ spin as described above can be used to move the off-guard echoes under the window to avoid this degradation - but by how much? In the bottom left plot of Figure 12, the requirement is to spin the pilots so that the overall CIR moves to the left in order to bring the off-guard post-echo under the window. In the bottom right plot on the other hand, the spin should be to the right as the off-guard path is a pre-echo. The test for differentiating between these two cases was explained above. More details of the estimation of the required $\mu$ spin are covered below, with reference to the flow diagrams in Figure 14 and 15. However in the next section an explanation of the channel corrector 250 shown in Figure 4A and Figure 4B is provided.

### 5.4. Operation of Channel Corrector

Figure 13A provides a schematic block diagram of the channel corrector 250 appearing in Figure 4A and 4B, whereas Figure 13B provides a schematic block diagram of the Pilot Assisted Channel Estimator 252. As shown in Figure 13B, the Pilot Assisted Channel Estimator receives the received symbol samples R(k) via a connecting channel 504. The samples are fed to a channel transfer function estimator 510 which extracts the pilot carriers from the received symbol $R(k)$ and forms an estimate of the channel using the extracted carriers. Since the carriers are distributed in a ratio of one pilot carrier for every twelve data bearing carriers, the estimate of the channel transfer function provides a discretely sub-sampled channel transfer function in accordance with a sampling rate of one twelfth. Interpolation in the time dimension is then performed by the time dimension interpolator 512, to the effect of utilising scattered pilot carriers provided by adjacent symbols. The relative position of the scattered pilot carriers shifts with respect to time between successive symbols, providing a facility of increasing the sampling rate of the channel transfer function to one in three. Accordingly, the time dimension interpolator 512 forms pilot carrier samples $P_3(k)$, which are received via connecting channel 500 by a complex multiplier 502. The complex multiplier 502 receives the phase spin adjustment $\mu$ in complex form $e^{j2\pi\mu/Nu}$ via connecting channel 209.1 from the signal processor 401. A phase adjusted channel transfer function having a sub-sampling rate of one third $P_3(k)e^{j2\pi\mu/Nu}$ is then fed to the frequency interpolator 514. The frequency interpolator 514 then forms an interpolated full-band version of the channel transfer function $P(k)$ by interpolating in the frequency domain the phase adjusted sub-sampled version of the channel transfer function $P_3(k)e^{j2\pi\mu/Nu}$.

The channel corrector shown in Figure 13A applies the channel transfer function estimate $\hat{P}(k)$ to correct for the effects of the channel impulse response on the received symbol. The frequency domain received symbol $R(k)$ is received via a connecting channel 504 at a complex multiplier 506. The complex multiplier 506 receives the phase spin adjustment $\mu$ in complex form $e^{j2\pi\mu/Nu}$ via connecting channel 209 from the signal processor 401 within the symbol time adjustment estimator 206. At the output of the complex multiplier a phase adjusted version of the received symbol $R(k)$ is formed from which the effects of the channel transfer function can then be removed. The phase adjustment is made to the received symbol $R(k)$ so as to match the phase adjustment which was made to the channel transfer function.

The effects of the channel transfer function are at least partly removed from the received symbol $R(k)$, by a divider 508, which receives on a first input the phase adjusted received symbol $R(k)e^{j2\pi\mu/Nu}$ and via a second input the estimated channel transfer function $P(k)$. The divider forms an estimate of the received data from the symbol $C(k)$ by dividing the received symbol $R(k)$ by the estimated channel transfer function formed by the pilot assisted channel estimator 252.

### 5.5. Optimising ISI and Channel Estimation Performance

The flow charts in Figures 14 and 15 show the calculations that are done by the symbol time adjustment estimator 206, to determine the adjustments to the SST $\eta$ and the phase spin $\mu$ in order to minimise ISI and optimise the frequency interpolation stage of the channel estimator, respectively. A brief explanation of the variables in the charts is as follows:

1. **CIRProfileStable** is a global flag that is asserted when any of the contents of the **CIRProflile** store that is updated at the end of each MF tracking period exceeds the set threshold of 7. This indicates that the CIR is now stable and hence there is a reasonable expectation that most of the paths in the channel (including off-guard paths) have been seen.

2. The range (in samples) from the main path over which paths are to be searched is $\pm wN_g$ samples whilst $N_u$ is the number of sub-carriers for the given OFDM mode.

3. **iStartChl** and **iStopChl** are respectively the indices of the **CIRProfile** store locations for the left-most and right-most locations in which **CIRProflile**[m] > 7. They represent the start and end of the full channel profile — including off-guard echoes that lie to within $\pm wT_g$ seconds of the main path.

4. sttchl and endchl provide the offsets (in samples) from the main path of **iStartChl** and **iStopChl** respectively. In general $sttchl \leq 0$ whilst $endchl \geq 0$ and the full channel span is given by $lenchl = endchl - sttchl$.

5. The process to calculate $\eta$ and $\mu$ starts when **CIRProfileStable** is set to 1 by the the symbol time adjustment estimator processor when connected to the guard adapted matched filter via the switch 207. At the start of the process, lenchl, sttchl and endchl are computed. If the channel delay spread (lenchl) is shorter than the guard interval, then the process exits as there is no need to either change the SST or spin the decimated CTF in the absence of off-guard echoes. Otherwise,

6. $\eta_0$ holds the offset of the CSST to the left of the main path. Thus in a channel without an off-guard pre-echo, it is expected that sttchl and $\eta_0$ will both be either approximately zero or have approximately the same value but of opposite sign. Thus it is expected that $D = \eta_0 + sttchl$ will be quite close to zero. Their sum is thus tested against **JITTER,** which is a small constant set according to the tracking accuracy of the tracker. If $|D|$ is much larger than **JITTER** then the channel must have an off-guard pre-echo. In this case, the process proceeds into sub-process (A) given in Figure 15. If on the other hand $|D|$ is less than or equal to **JITTER,** then the channel must have an off-guard post-echo. In this case, sub-process (B) of Figure 15 is invoked. These sub-processes are now explained in detail.

### 5.6. Optimising ISI and Channel Estimation Performance: Pre-echo case

When the channel incorporates an off-guard pre-echo (sub-process (A) in Figure 15), then two things need to be done:

(a) Estimate how much to pull the SST back by as $\eta$. This estimate should allow room to still maintain any in-guard CIR within $N_g$ samples of the new SST i.e. the in-guard CIR span needs to be taken into account. The in-guard CIR span can be approximated to within one sample by $2\mu_0$. The SST pull back is thus given by:

$$\eta = N_g - 2\mu_0.$$

(b) Estimate how much $\mu$ spin to apply to $P_3(k)$ to bring the off-guard pre-echo under the FI-TF window. In this pre-echo case, since the spin should move the CTF to the right, the estimate should be a negative number. First however, there's need to differentiate between two further cases:

- The case where the channel span *lenchl* $>N_u/3$. Here, the full channel span will not fit under the FI-TF window so the best that can be done is to apply the maximum spin allowed. The maximum spin allowed is $N_u/6$. However, if the channel also has a non-zero in-guard CIR span, $2\mu_0$, then half of this is subtracted from $N_u/6$. The CTF spin is thus set as:

$$\mu = \mu_0 - N_u/6. \text{ This is always negative as } \mu_0 < N_u/6.$$

- The case where the channel span *lenchl* $\leq N_u/3$. Here, the full channel span can fit under the FI-TF window so the CTF spin can be set so as to simply centre the CIR under the window as: $\mu = \mu_0 - \textit{lenchl}/2$.

### 5.7. Optimising ISI and Channel Estimation Performance: Post-echo case

When the channel incorporates an off-guard post-echo (sub-process (B) in Figure 15), then there is no need to move the SST so set $\eta = 0$. Only the CTF spin is needed to pull the off-guard post-echo under the FI-TF window. Since the spin should be to the left, the estimate should be a positive number. Here again, there is need to differentiate between two cases:

- The case where the channel span *lenchl* $>N_u/3$. Here, the full channel span will not fit under the FI-TF window so the best that can be done is to apply the maximum spin allowed. The maximum spin allowed is $N_u/6$. However, if the channel also has a non-zero in-guard CIR span, $2\mu_0$, then half of this has to be subtracted from $N_u/6$. The CTF spin is thus set as:

$$\mu = N_u/6 - \mu_0.$$

- The case where the channel span *lenchl* $\leq N_u/3$. Here, the full channel span can fit under the FI-TF window so the CTF spin can be set so as to simply centre the CIR under the window as:

$$\mu = \textit{lenchl}/2 - \mu_0.$$

The estimated SST shift and CTF spin are applied respectively to the NCO to effect an earlier trigger of the FFT; and to the complex multipliers 502 and 506 to position the CIR optimally under the FI-TF window.

### 5.8. Dimensioning of the off-guard echo enhancements

Whilst the channel delay spread limit guarantee for zero ISI is only $T_g$ seconds, the theoretical limit for optimum channel estimation is up to $T_u/3$ seconds. In practice, this means that networks that are so dimensioned as to cause echoes to arrive outside the guard interval such as sparse SFNs can still operate with reasonable margins. The dimensioning (operating range) of the off-guard echo enhancement and its logic and storage requirements over and above those of a symbol tracker which only deals with in-guard echoes are examined here. The main dimensioning parameter is the value of the constant w for each mode and guard.

For the MF based algorithm described above, storage is needed for the symbol integrator and the **CIRProflile** array (4 bits per location). There are also processing implications for the noise rejection processes that take place at the output of the MF but these mostly impact the logic or clock speed. To dimension the receiver to work with delay spreads up to the optimum channel estimation limit of $T_U/3$ seconds, the MF will have to match the guard samples over $\pm N_U/3$ samples. To cover this range, the size of the storage required would be 1 + 2*2048/3 = 1367 words for 2K and 1 + 2*8192/3 = 5463 words for 8K. For a dual mode demodulator, the larger figure is used giving the storage required as:

- **CIRProfile:** 5463 x 4 bits (cf. nothing for in-guard tracker)
- Symbol Integrator: 5463 words (cf. 4097 words for in-guard tracker)

Various modifications may be made to the example embodiments herein before described without departing from the scope of the present invention. In particular, it will be appreciated that the combination of a pilot assisted tracker and a guard adapted filter processor can be applied to facilitate synchronisation with any signal having a guard interval with data repeated from data bearing signal samples of the transmitted signal.

Furthermore it will be appreciated that the term pilot should be interpreted broadly as meaning any signal or data symbols which are transmitted with the data to be communicated and which are known to the receiver.

The present invention is not limited to DVB. Accordingly embodiments of the present invention can be provided in a receiver for determining a synch time for recovering data from data bearing signal samples, the signal samples including a guard period which carries data repeated from a data bearing part. The receiver may comprise a pilot assisted tracker, which is operable to determine an adjustment to the synch time from a pilot assisted channel impulse response estimate. A guard adapted filter processor comprises a filter and a filter controller. The controller is operable to adapt the impulse response of the filter to the signal samples from the guard period, to excite the filter with the symbol signal samples to generate an output signal, which provides a further representation of the channel impulse response. A symbol time adjustment estimator is operable to adjust the synch time in accordance with the adjustment provided by at least one of the pilot assisted tracker and the guard adapted filter processor.

**6. References**

[1] Co-pending UK patent application serial number 0115061.4.
[2] Co-pending UK patent applications serial numbers 0027423.3 and 0027424.1.
[3] Erik Stare, *"Mobile reception of 2K and 8K DVB-T Signals,"* Proceedings of IBC '98 pp 473-478.

**Claims**

1. A receiver for determining a symbol synch time for recovering data from a symbol of signal samples generated in accordance with orthogonal frequency division multiplexing, the symbol including a guard period which carries data repeated from a data bearing part of the symbol and signals bearing pilot carriers, said receiver comprising

   a pilot assisted tracker operable to determine an adjustment to the symbol synch time from a pilot assisted channel impulse response estimate,
   a guard adapted filter processor comprising a filter and a filter controller operable
   to adapt the impulse response of the filter to the signal samples from the guard period,
   to excite the filter with the symbol signal samples to generate an output signal which provides a further representation of the channel impulse response, and
   a symbol time adjustment estimator including a channel impulse response profile store and a signal processor, the signal processor being operable to maintain a representation of the impulse response of the channel through which the received symbol has passed in the channel impulse response profile store and to adjust the symbol synch time in accordance with the adjustment provided by at least one of the pilot assisted tracker and the guard adapted filter processor, wherein the adjustment includes an offset arranged to reduce the effects of inter symbol interference caused by channel impulse response components which are outside the guard period with respect to a main path through which the symbol is received.

2. A receiver as claimed in Claim 1, wherein the symbol time adjustment estimator is operable to generate the adjustment to the symbol synch time in accordance with an earlier signal path revealed in the further representation of the channel impulse response.

**3.** A receiver as claimed in Claims 1 or 2, wherein the symbol time adjustment estimator is operable

to compare a temporal length of the channel impulse response from the profile store with the length of the guard interval, and
if the temporal length of the channel impulse response is greater than the guard period, setting the offset to the timing adjustment to zero when the channel impulse response delay spread includes a post cursive echo and calculating the offset to the timing adjustment to the symbol start time in accordance with a difference between the guard interval and a temporal length of the channel impulse response lying within the guard interval, when the channel impulse response delay spread includes a pre-cursive echo.

**4.** A receiver as claimed in Claim 1, 2 or 3, wherein the pilot carriers are distributed throughout the symbol, the pilot assisted tracker comprises

a pilot channel impulse response generator operable to generate the pilot assisted channel impulse response in the frequency domain, by comparing the pilot carrier signals with re-generated versions of the pilot carriers, an interpolation filter operable to filter the pilot assisted channel impulse response to the effect of providing a time domain interpolation of the pilot assisted channel impulse response, and
a pilot phase adjuster operable to adjust the phase of the frequency domain channel transfer function estimate to the effect of centring energy of the time domain channel impulse response estimate within a window corresponding to the interpolation filter transfer function.

**5.** A receiver as claimed in Claim 4, wherein the pilot phase adjuster is operable to adjust the phase of the frequency domain pilot assisted channel transfer function in accordance with whether the channel impulse response provides post-cursor off-guard impulse response components or pre-cursor off-guard impulse response components in combination with whether the length of the channel impulse response is greater than the bandwidth of the interpolation filter.

**6.** A receiver as claimed in Claim 5, wherein the pilot phase adjuster is operable

if the channel impulse response provides pre-cursive off-guard components to form the phase adjustment from a difference between half the temporal length of the channel impulse response lying within the guard interval and half the total length of the channel impulse response, if the length of the channel impulse response is less than the spectral spacing between pilot carriers ($3/Tu$), and otherwise to form the phase adjustment from a difference between half the temporal length of the channel impulse response lying within the guard interval and half the spectral spacing between pilot carriers, or
if the channel impulse response provides pre-cursive off-guard components to form the phase adjustment from a difference between half the total length of the channel impulse response and half the temporal length of the channel impulse response lying within the guard interval, if the length of the channel impulse response is less than the spectral spacing between pilot carriers ($3/Tu$), and otherwise to form the phase adjustment from a difference between half the spectral spacing between pilot carriers and half the temporal length of the channel impulse response lying within the guard interval.

**7.** A receiver as claimed in Claim 4, 5 or 6, comprising

a channel correction processor operable to reduce the effects of the channel impulse response in the received symbol by substantially cancelling the pilot assisted channel impulse response estimate from the received symbol.

**8.** A receiver for recovering data from a symbol of signal samples generated in accordance with orthogonal frequency division multiplexing, the symbol including pilot carrier signals distributed throughout the symbol, the receiver comprising

a pilot assisted tracker operable to generate a pilot assisted channel impulse response estimate, and
a channel correction processor operable to reduce the effects of the channel impulse response in the received symbol using the pilot assisted channel impulse response estimate, wherein the pilot assisted tracker comprises

a pilot channel impulse response generator operable to generate the pilot assisted channel transfer function in the frequency domain, by comparing the pilot carrier signals with re-generated versions of the pilot carriers, an interpolation filter operable to filter the pilot assisted transfer function to the effect of interpolating the pilot assisted channel transfer function, and

a pilot phase adjuster operable to adjust the phase of the frequency domain channel transfer function estimate to the effect of centring energy of the time domain channel impulse response estimate within a window corresponding to the interpolation filter transfer function.

**9.** A receiver as claimed in Claim 8, comprising

a guard adapted filter processor including a filter and a filter controller operable to adapt the impulse response of the filter to the signal samples from the guard period, to excite the filter with the symbol signal samples to generate an output signal which provides a further representation of the channel impulse response, and

a symbol time adjustment estimator operable to form a symbol synch time in accordance with the adjustment provided by at least one of the pilot assisted tracker and the guard adapted filter processor.

**10.** A receiver as claimed in Claim 8 or 9, wherein the pilot phase adjuster is operable to adjust the phase of the frequency domain pilot assisted channel transfer function in accordance with whether the channel impulse response provides post-cursor off-guard impulse response components or pre-cursor off-guard impulse response components in combination with whether the length of the channel impulse response is greater than the bandwidth of the interpolation filter.

**11.** A receiver as claimed in Claim 10, wherein the pilot phase adjuster is operable

if the channel impulse response provides pre-cursive off-guard components to form the phase adjustment from a difference between half the temporal length of the channel impulse response lying within the guard interval and half the total length of the channel impulse response, if the length of the channel impulse response is less than the spectral spacing between pilot carriers ($3/Tu$), and otherwise to form the phase adjustment from a difference between half the temporal length of the channel impulse response lying within the guard interval and half the spectral spacing between pilot carriers, or

if the channel impulse response provides pre-cursive off-guard components to form the phase adjustment from a difference between half the total length of the channel impulse response and half the temporal length of the channel impulse response lying within the guard interval, if the length of the channel impulse response is less than the spectral spacing between pilot carriers ($3/Tu$), and otherwise to form the phase adjustment from a difference between half the spectral spacing between pilot carriers and half the temporal length of the channel impulse response lying within the guard interval.

**12.** A method of determining a symbol synch time for recovering data from a symbol of signal samples generated in accordance with orthogonal frequency division multiplexing, the symbol including a guard period which carries data repeated from a data bearing part of the symbol and pilot carrier signals, the method comprising

determining an adjustment to the symbol synch time from a pilot assisted channel impulse response estimate, adapting the impulse response of a filter to the signal samples from the guard period,

exciting the filter with the symbol signal samples to generate an output signal which provides a further representation of the channel impulse response,

maintaining a representation of the impulse response of the channel through which the received symbol has passed in a channel impulse response profile store,

adjusting the symbol synch time in accordance with the adjustment provided by at least one of the pilot assisted tracker and the output signal from the guard adapted matched filter, wherein the adjustment includes an offset arranged to reduce the effects of inter symbol interference caused by channel impulse response components which are outside the guard interval with respect to a main path through which the symbol is received.

**13.** A method of determining a symbol synch time as claimed in Claim 12, comprising

generating the adjustment to the symbol synch time in accordance with an earliest signal path revealed in the further representation of the channel impulse response.

**14.** A method of determining as claimed in Claim 12 or 13, comprising

comparing the length of a channel impulse response profile store with the length of the guard interval, and if the length of the channel impulse response is greater than the guard interval, setting the offset to the timing adjustment to zero when the channel impulse response delay spread includes a post cursive echo and calculating the offset to the timing adjustment to the symbol start time in accordance with a difference between the guard interval and a temporal length of the channel impulse response lying within the guard interval.

**15.** A method for recovering data from a symbol of signal samples generated in accordance with orthogonal frequency division multiplexing, the symbol including pilot carrier signals distributed throughout the symbol spectrum, the method comprising

generating a pilot assisted channel impulse response estimate, and
reducing the effects of the channel impulse response in the received symbol using the pilot assisted channel impulse response estimate, by generating the pilot assisted channel transfer function in the frequency domain, comparing the pilot carrier signals with re-generated versions of the pilot carriers,
filtering the pilot assisted channel transfer function to the effect of providing a frequency domain interpolation of the pilot assisted channel transfer function, and
adjusting the phase of the frequency domain channel transfer function estimate to the effect of centring energy of the time domain channel impulse response estimate within a window corresponding to the interpolation filter transfer function.

**16.** A method as claimed in Claim 15, comprising

adapting the impulse response of the filter to the signal samples from the guard period,
exciting the filter with the symbol signal samples to generate an output signal which provides a further representation of the channel impulse response, and
adjusting the symbol synch time in accordance with the adjustment provided by at least one of the pilot assisted tracker and the guard adapted filter processor.

**17.** A method as claimed in Claim 15 or 16, comprising

adjusting the phase of the frequency domain pilot assisted channel transfer function in accordance with whether the channel impulse response provides post-cursor off-guard impulse response components or pre-cursor off-guard impulse response components in combination with whether the length of the channel impulse response is greater than the bandwidth of the interpolation filter.

**18.** A method as claimed in Claim 17, wherein the adjusting the phase of the frequency domain pilot assisted channel transfer function

if the channel impulse response provides pre-cursive off-guard components to form the phase adjustment from a difference between half the temporal length of the channel impulse response lying within the guard interval and half the total length of the channel impulse response, if the length of the channel impulse response is less than the spectral spacing between pilot carriers ($3/Tu$), and otherwise to form the phase adjustment from a difference between half the temporal length of the channel impulse response lying within the guard interval and half the spectral spacing between pilot carriers, or
if the channel impulse response provides pre-cursive off-guard components to form the phase adjustment from a difference between half the total length of the channel impulse response and half the temporal length of the channel impulse response lying within the guard interval, if the length of the channel impulse response is less than the spectral spacing between pilot carriers ($3/Tu$), and otherwise to form the phase adjustment from a difference between half the spectral spacing between pilot carriers and half the temporal length of the channel impulse response lying within the guard interval.

**19.** A digital television including a receiver according to any of claims 1 to 11.

**20.** A digital television operable in accordance with the method according to any of claims 12 to 18.

**21.** A computer program providing computer executable instructions, which when loaded onto a computer configures the computer to operate as a receiver as claimed in any of Claims 1 to 11.

**22.** A computer program providing computer executable instructions, which when loaded on to a computer causes the computer to perform the method according to Claims 12 to 18.

**23.** A computer program product having a computer readable medium recorded thereon information signals representative of the computer program claimed in Claim 21 or 22.

EP 1 416 693 A2

Fig. 1

(a)

-Tg        +Tg

FFT Buffer

(b)

-Tg        +Tg

ISI

FFT Buffer

(c)

-Tg        +Tg

ISI

FFT Buffer

Fig. 2

| 102 | 100 | 122 | 104 | 124 | 106 | 126 | 108 | 128 | 110 | 130 | 112 |

IF
input

A/D
Converter

IF To
Baseband
Conversion

Re-sampling
Carrier
Offset
Correction
etc.

FFT

Post FFT
Processor

Forward
Error
Correction
(TEC)

MPEG2-TS
Output

114

FFT Window
Trigger

118

120

FFT Symbol
Timing
Recovery

116

Fig. 3

Fig. 4A

Fig. 4B

Fig. 5

Fig. 6

EP 1 416 693 A2

Fig. 7

| | CONSTANTS |
|---|---|
| | Ng |
| | w |

rAddr=0

Symbol Integratorc(siRAM)
CIRProfile Array (cpRAM)

siRAM[rAddr]>0? — No → cpRAM[rAddr]=0? — No → cpRAM[rAddr] = cpRAM[rAddr]-1

Yes ↓ (from siRAM)

Yes (from cpRAM=0?) → cpRAM[rAddr]=0

cpRAM[rAddr]=15? — No → cpRAM[rAddr] = cpRAM[rAddr]+1

Yes ↓

rAddr=rAddr+1

rAddr>2wNg+1? — No

Yes ↓

Finished

Fig. 8

**Fig. 9**

Echo at delay 20μs

Echo at delay -20μs

Echo at delay 56μs

Echo at delay -56μs

Fig. 10

Echo at delay 20μs

Echo at delay -20μs

Echo at delay 56μs

Echo at delay -56μs

Fig. 11

Fig. 12

EP 1 416 693 A2

R(K)

504

506

$$\frac{R(K)e^{2\pi j\frac{\mu}{N_u}}}{\hat{P}(K)}$$

508

$\hat{C}(K)$

250

209.2

211

## Fig. 13A

Pilot Assisted Channel Estimator

252

510

Channel Transfer Function Estimator

$P_{12}(K)$

512

Interpolation in Time Dimension

$P_3(K)$

502

$P_3(K)e^{2\pi j\frac{\mu}{N_u}}$

514

Frequency Interpolator

$\hat{P}(K)$

R(K)

504

211

$L_1$

209.1

$e^{2\pi j\frac{\mu}{N_u}}$

## Fig. 13B

| | Constants |
|---|---|
| | Jitter |
| | $N_u$ |
| | $N_g$ |
| | w |

CIRProfileStable (0 or 1)
iStartChl, iStopChl
$\eta_0$, $\mu_0$

**Start**

CIRProfileStable =1? — No → **Exit**

Yes

sttchl = iStartChl -$wN_g$
endchl= iStopChl - $wN_g$
lenchl = |iStopChl - iStartChl|

lenchl > Ng? — No

Yes

$|\eta_0 + sttchl| > JITTER$ ? — No → **B**

Yes

**A**

Fig.14

A

$\eta = Ng - 2\mu_0$

lenChl > Nu/3?

No → $\mu = \mu_0 - lenchl/2$

Yes

$\mu = \mu_0 - Nu/6$

Finish

B

$\eta = 0$

lenChl > Nu/3?

No → $\mu = lenchl/2 - \mu_0$

Yes

$\mu = Nu/6 - \mu_0$

Finish

Fig.15